# EUROPÄISCHE PATENTSCHRIFT

(11) **EP 2 830 980 B1**
(45) Veröffentlichungstag und Bekanntmachung des Hinweises auf die Patenterteilung: **16.03.2016**
(21) Anmeldenummer: 13730798.9
(22) Anmeldetag: 21.03.2013
(51) Int. Cl.: B65G 47/08, B65B 17/02, B65B 21/06

(54) **VORRICHTUNG ZUR HERSTELLUNG VON GEBINDEN**
DEVICE FOR THE CREATION OF PACKAGED UNITS
DISPOSITIF POUR LA PRODUCTION DE CONTENANTS

(30) Priorität: 26.03.2012 DE 102012005927
(43) Veröffentlichungstag der Anmeldung: 04.02.2015
(73) Patentinhaber: KHS GmbH, 44143 Dortmund (DE)
(72) Erfinder: STUHLMANN, Christoph, 34497 Korbach (DE)
(86) Internationale Anmeldenummer: PCT/EP2013/000853
(87) Internationale Veröffentlichungsnummer: WO 2013/143667

(56) Entgegenhaltungen:
- EP-A2- 2 258 625
- DE-A1-102009 044 271

## Beschreibung

Die Erfindung bezieht sich auf eine Vorrichtung zur Herstellung von Gebinden gemäß dem Oberbegriff des Patentanspruchs 1, wobei aus einem breitem Behälterstrom mittels Gassenteilung Behälter in mehrere einspurige Behälterströme umgewandelt werden, und mit mindestens einer Abteil- und/oder Verdichtereinheit zum Abteilen und Verdichten einer vorbestimmten Anzahl an Behältern jeweils zu dem späteren Gebinde zusammengefasst werden, wobei Auftragselemente vorgesehen sind, so dass zumindest einer der Behälter des Gebindes ein Haft- oder Klebemittel und/oder einen Haft- oder Klebemittelauftrag zumindest an einer Kontakt- oder Berührfläche aufweist.

Behälter im Sinne der Erfindung sind beispielsweise Flaschen, Dosen, Tuben, Pouches, jeweils aus Metall, Glas und/oder Kunststoff, also zum Beispiel auch PET-Flaschen, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Derartige Behälter, z.B. PET-Flaschen weisen einen Kontaktbereich auf, welcher sphärisch gewölbt ausgeführt ist, so dass die Behälter quasi aneinander um eine Umfangsbahn, also an einem "Abrollring" abrollen können. Bei Glasflaschen ist dies bei mehrmaligem Gebrauch der Flasche zum Beispiel mittels des meistens in heller Hervorhebung erkennbaren Abnutzungsringes erkennbar. Derartige "Abrollringe" können bei PET-Flaschen nicht nur im Kopfbereich, sondern auch im Fußbereich angeordnet sein.

Im Detail erfolgt die Herstellung der Gebinde z.B. in der Weise, dass die Behälter auf einer Transportebene eines Transporteurs aufstehend und mit ihrer Behälterachse in vertikaler Richtung oder im Wesentlichen vertikaler Richtung orientiert in einem Massentransport bzw. in einem breiten Behälterstrom zugeführt werden, in dem die Behälter hinsichtlich markanter Behälter und/oder Ausstattungsmerkmale eine willkürliche Orientierung aufweisen. Dieser breite Behälterstrom wird dann durch Gasseneinteilung in mehrere einspurige Behälterströme umgewandelt. In weiteren Verfahrensschritten erfolgt das Abteilen der die späteren Gebinde bzw. deren Behältergruppen bildenden Behälter aus den einspurigen Behälterströmen, das Zusammenführen der notwendigen Anzahl von Behältern jeweils zu einer verdichteten Behältergruppe, in der die Behälter mit mehreren Mantel- oder Umfangsflächen, also mit den Kontakt- oder Berührflächen gegeneinander anliegen, und dass Verbinden der Behälter jeder Behältergruppe zu dem kompakten und festen bzw. stabilen Gebinde.

Es ist bekannt, mehrere Artikel jeweils zu einer Artikelgruppe zusammen zu fassen oder zu formieren und aus den Artikelgruppen unter Verwendung von Schrumpffolien (z.B. US 7 726 464 A1) feste bzw. transportfähige Lager- und Transporteinheiten oder Gebinde herzustellen. Nachteilig ist hierbei unter anderem, dass die dabei verwendeten Folien sowie insbesondere das Aufschrumpfen der Folien durch Wärme- oder Energieeintrag nicht unerhebliche Kosten verursacht.

Vorgeschlagen wurde auch bereits, transportfähige Gebinde dadurch herzustellen, dass die jeweils zu einer Behältergruppe formierten Behälter durch eine die Behältergruppe schlaufenartig umgreifende Umreifung (DE 10 2009 025 824 A1, DE 10 2009 044 271 A1, DE 41 26 212 A1) verpackt, d.h. miteinander zu einem Gebinde verbunden werden, was eine besonders kostengünstige und einfache Möglichkeit zur Herstellung von Gebinden bzw. Transport- und Lagereinheiten darstellt. Die Umreifung kann auch mit den Behältern verklebt werden. Nachteilig bei der Umreifung ist allerdings, dass beim ersten Entnehmen eines Behälters aus einem solchen Gebinde die in dem Gebinde verbliebenen Behälter durch die Umreifung nicht mehr zusammengehalten werden. Dies gilt nicht nur dann, wenn die Umreifung getrennt oder zerschnitten wird, sondern auch dann, wenn es möglich ist, ohne Durchtrennen der Umreifung einen Behälter aus dem Gebinde zu entnehmen.

Weiterhin besteht beim Transport derartiger Gebinde auf einem Bandfördermittel immer die Gefahr, dass sich zylindrische oder weitgehend zylindrische Artikel, wie Dosen, Flaschen oder Behälter durch Vibration, Stöße etc. eine nestende Position einnehmen, also in die Lücke der Nachbarreihe rutschen. Um dies zu verhindern muss bei bekannten Gebinden eine sehr große Spannung auf die Umreifung gebracht werden.

Die DE 10 2006 037 105 A1 dagegen befasst sich mit einem Verfahren zum Zusammenstellen von Flaschenpaketen, bei welchem auf beiden Seiten einer Bahn ein Drehstern vorgesehen wird, welcher Flaschenhälse in Klammern an Flachträgern hineindrückt. Das Flaschenpaket wird noch mit einem Band oder einer Umhüllung (Folie) umfasst.

Gemäß der DE 23 31 193 wird an Behälter ein Klebemittel in schmalen Flächen oder Reihen angebracht, wobei jeweils benachbarte Flächen, welche nicht mit Klebemittel versehen sind, ein Greifen der Packung zum Zwecke des Tragens ermöglichen soll. An den Klebestellen kleben die Behälter aneinander. Die EP 2 096 039 A1 offenbart ebenfalls Behälter mit einem Klebemittel zu versehen, wobei aber zudem noch eine Schrumpffolie um das Flaschenpaket angeordnet wird.

Eine Vorrichtung mit den Merkmalen des Oberbegriffs des Anspruchs 1 ist aus EP 2 258 625 A2 bekannt.

Aufgabe der Erfindung ist es, eine Vorrichtung und ein Verfahren zum Herstellen von Gebinden der Eingangs genannten Art anzugeben, bei dem trotz des Verzichts auf eine umgreifende Folie und/oder trotz des Verzichts auf eine Umreifung in einfacher Weise stets vermieden ist, dass die Artikel bei dem Transport in eine nestende Position gelangen, wobei auch nach der Entnahme eines oder mehrerer Artikel aus einem Gebinde der Zusammenhalt der verbliebenen Artikel im Gebinde erhalten bleibt bzw. wieder hergestellt werden kann.

Zur Lösung dieser Aufgabe ist eine Vorrichtung zur Herstellung von Gebinden entsprechend dem Patentanspruch 1 vorgesehen, wobei ein Lineartransporteur vorgesehen ist, welcher Transportelemente aufweist, die jeweils einen steuerbaren Antrieb aufweisen und entlang eines Führungselementes umlaufend sind, wobei die Transportelemente eine der Anzahl von Behältern des späteren Gebindes entsprechende Anzahl an Kopfführungen aufweisen, welche relativ zum Transportelement axialbeweglich und/oder rotierbar sind.

Behälter im Sinne der Erfindung sind, z.B. PET-Flaschen, d.h. u.a. Flaschen, Dosen Tuben, Pouches, jeweils aus Metall, Glas und/oder Kunststoff, aber auch andere Packmittel, insbesondere solche, die zum Abfüllen von flüssigen oder viskosen Produkten geeignet sind, aber auch bereits zu Gruppen (Mehrfachpack) zusammen gefasste Behälter. Die Behälter des Gebindes sind in nicht-nestender Position angeordnet.

"Haft- oder Klebemittel" in Sinne der Erfindung sind u.a. alle Materialien oder Massen, mit denen eine Klebeverbindung zwischen Behältern möglich ist, insbesondere Verbindungen, Materialien oder Massen, die im flüssigen oder zähflüssigen Zustand aufgebracht einen selbstklebenden Auftrag bilden und/oder unter Anwendung von Druck und/oder durch Energieeintrag und/oder nach einem Aushärten oder Vernetzen (auch durch Energieeintrag) eine Klebeverbindung bewirken. "Haft- oder Klebemittel" in Sinne der Erfindung sind u.a. auch Mehrschichtmaterialien, z.B. solche aus wenigstens einem Trägermaterial, welches mit einem Material beschichtet ist, mit dem eine Klebeverbindung zwischen Behältern möglich ist, also mindestens zweiseitig haftend- und/oder klebend aktiv sind. Solche Haft- oder Klebemittel können als Pads bezeichnet werden. Ein "klebender" Behälter weist im Sinne der Erfindung Haft- oder Klebemittel auf, bzw. ist mit einem Haft- und Klebemittelauftrag versehen. Das Haft- oder Klebemittel ist bevorzugt derart gewählt, dass die Behälter händisch und zerstörungsfrei aus dem Gebinde lösbar bzw. voneinander trennbar sind. Denkbar ist, dass flüssiges Klebemittel von den Auftragselementen aufgetragen wird. Möglich ist, wenn ein niedrigviskoser UV-aushärtender Klebstoff aufgetragen wird. Geeignet wäre auch ein Heizleim, welcher jedoch sehr schnell abkühlt, und so eventuell seine Klebeigenschaften aufgeben könnte, bevor die Behälter des Gebindes hinreichend miteinander verklebt sind. Ein UV-aushärtender Klebstoff ist auch vorteilhaft hinsichtlich der besonders leichten Einstellung seiner gewünschten Eigenschaften. Eine entsprechende Aushärtstation bzw. eine Aushärtstrecke ist in sinnvoller Weise stromab der Auftragselemente stationär oder entlang des Lineartransporteurs oberhalb bzw. gegebenenfalls auch unterhalb vorgesehen. Eine Aushärtstation kann zum Beispiel ein Tunnel mit UV-Ausleuchtung sein.

Zielführend ist, wenn die Transportelemente als Schlitten ausgeführt sind, die auch als Tragrahmen bezeichnet werden können. Die Transportelemente bzw. die Schlitten weisen den steuerbaren Antrieb auf, wobei jeder Antrieb separat von einer entsprechenden Steuereinheit ansteuerbar ist. Dies ist günstig im Sinne der Erfindung, da das jeweilige Transportelement so eine an die jeweilige Erfordernis angepasste Transportgeschwindigkeit haben kann.

Mit dem steuerbaren Antrieb steht das Transportelement mit dem Führungselement in Kontakt. Das Führungselement kann auch als Führungsschiene bezeichnet werden, an welcher das Transportelement durch den steuerbaren Antrieb entlang bewegt wird. Das Führungselement weist einen Hintrum und einen Rücktrum mit jeweils dazwischen angeordneten Umlenkabschnitten auf, wobei das Führungselement selbst natürlich keine Fördergeschwindigkeit aufweist. Lediglich die Transportelemente werden mittels des steuerbaren Antriebs relativ zum Führungselement bewegt. Das Rücktrum ist bezogen auf das Hintrum bevorzugt oberhalb desselben angeordnet.

Mit den Kopfführungen werden die Behälter an dem Transportelement gehalten von der Eingangsseite an den Auftragselementen vorbei zur Ausgangsseite transportiert. Eingangsseitig werden die Behälter von einem Eingangsförderer übernommen. Ausgangsseitig werden die Behälter, mit Haft- und Klebemittel versehen, auf einen Ausgangsförderer übergeben. Der Eingangs- bzw. der Ausgangsförderer kann jeweils als Bandförderer ausgeführt sein

Zweckmäßig im Sinne der Erfindung ist, wenn das Transportelement bzw. der Schlitten an seiner jeweils längs zur Transportrichtung angeordneten Schmalseite an jeweils einem Führungselement gehalten ist. Die senkrecht zu den Schmalseiten angeordneten Querseiten erstrecken sich quer zur Transportrichtung zwischen den Führungselementen, so dass der Tragrahmen bzw. der Schlitten sicher und stabil geführt ist. Der steuerbare Antrieb kann dabei lediglich an einer der beiden Schmalseiten angeordnet sein, wobei an der jeweils anderen Schmalseite dann ein entsprechendes, durch den gegenüberliegenden Antrieb angetriebenes Rollenelement angeordnet sein kann. Natürlich können auch an beiden Schmalseiten steuerbare Antriebe angeordnet sein, welche natürlich synchronisiert sein sollten. Der steuerbare Antrieb kann z.B. als Servomotor ausgeführt sein.

Zweckmäßig ist, dass das Transportelement einen steuerbaren Antrieb hat, welcher von der besagten Steuereinheit separat ansteuerbar ist. So kann das Transportelement unterschiedliche Geschwindigkeiten entlang seines Transportweges aufweisen. Insbesondere können die Transportelemente, welche den Rucktrumm erreicht haben hier eine höhere Geschwindigkeit aufweisen als die Transportelemente, welche sich noch entlang des Hintrums bewegen. So kann die Anzahl an Transportelementen im System vorteilhaft bezogen auf nicht geschwindigkeitessteuerbare Transportelemente verringert werden, da insbesondere entlang des Rücktrum eine zunächst höhere Geschwindigkeit angesteuert werden kann, wobei die Transportelemente im Bereich des Rücktru mendes in Wartestellung sein können. Entlang des Transportweges des Hintrums dagegen haben die jeweiligen Transportelemente eine bevorzugt gleiche Geschwindigkeit zu einander.

Mit den Transportelementen können die Behälter entlang des Transportweges des Hintrums freischwebend transportiert werden, da die Behälter an den Kopfführungen gehalten sind. Die Kopfführungen können Pack- oder Zentriertulpen zum mündungsseitigen Halten der Behälter aufweisen. Günstig ist, dass die Kopfführungen relativ zum Transportelement also relativ zum Tragrahmen bzw. Schlitten beweglich sind. So kann z.B. eine gezielte Ausrichtung der Behälter nach Gestaltungsmerkmalen, nach vorhandenen Etiketten oder ähnlichen Merkmalen durchgeführt werden, so dass die Behälter innerhalb des späteren Gebindes zueinander gleichausgerichtet sind. Dazu müssen lediglich die Kopfführungen entsprechend angesteuert werden, wobei noch zweckmäßig ist, wenn jede Kopfführung separat, also unabhängig von den jeweils anderen steuerbar ist. Die Steuersignale bzw. Steuerbewegungen können von einer entsprechenden Steuereinheit, aber natürlich auch von der zentralen Steuereinheit veranlasst werden. Dabei könnte lediglich eine entsprechende Inspektionsvorrichtung vorgesehen werden, welche die Istposition der Behälter anhand der zu untersuchenden Merkmale, beispielsweise anhand der Etikettenposition erkennt, und entsprechender Abgleiche mit abgelegten Sollpositionen durchführt und sodann entsprechende Signale generiert. Günstig ist dabei, dass die Kopfführungen um Ihre Achse herum rotierbar, aber auch axial beweglich sind, wobei die Behälter freischwebend transportiert werden können. Durch die vorhandenen Freiheitsgrade können sich so verschiedene, erforderliche Positionsänderungen überlagern, so dass jeder Behälter im Einklang mit den anderen Behältern in die gewünschte Sollposition ausrichtbar ist. Durch den freischwebenden Transport können auf den Boden wirkende Reibwiderstände ausgeschlossen werden,

In bevorzugter Ausgestaltung sind die Auftragselemente bzw. Auftragsstationen in Transportrichtung gesehen vor der Übergabe der Behälter auf bzw. an den Ausgangsförderer angeordnet. Die Auftragselemente versehen den oder die Behälter mit Haft- oder Klebemittel, wobei die Behälter mittels der axialen Bewegungsmöglichkeit der Behälter über die Kopfführungen optional zueinander ausgerichtet gegeneinander bewegt werden können, sodass bereits ein gewisser Anpressdruck erzeugbar ist, was einem Klebe- bzw. Haftverbund der Behälter aneinander zugute kommt.

In günstiger Ausgestaltung können in Transportrichtung gesehen aufeinander folgend mehrere Auftragselemente bzw. Auftragsstationen vorgesehen sein, was auch dem Umstand der optionalen Rotation des an der jeweiligen Pack-oder Zentriertulpe gehaltenen Behälters Rechnung trägt. Durch die Rotation der Behälter entlang der Transportrichtung könnten so in Umfangsrichtung der Behälter gesehen versetzte Kontakt- und Berührflächen mit Haft- oder Klebemittel versehen werden, was einen Klebeverbund begünstigt, da so quasi jeder Behälter zum direkt benachbarten Behälter an zumindest zwei Kontakt- und Berührflächen einen Klebeverbund eingehen kann.

Das Gebinde kann z.B. aus sechs Behältern gebildet sein. Dabei kann von den Kopfführungen, wie bereits oben angedeutet, eine Kraft quer und längs zur Transportrichtung ausgeübt werden, so dass die betreffenden Behälter eines Gebindes unter Krafteinwirkung gegeneinander gedrückt bzw. gepresst werden, was den Klebverbund positiv beeinflusst. Dazu könnten die Kopfführungen weiter angenähert werden, um die wirkende Druckkraft zu erhöhen.

Vorteilhaft ist, dass mit einem Transportelement jeweils mehrere spätere Gebinde, also z.B. zwei Gebinde mit je sechs Behältern, wie oben beschrieben bearbeitet werden können. So sind eingangsseitig zwei separate Eingasströme aufzunehmen und ausgangsseitig zwei separate Ausgangsströme absetzbar sind.

Wird UV-aushärtender Klebstoff aufgetragen, kann eine Aushärtestation oder -strecke vorgesehen sein. Die Aushärtestation kann ober- oder unterhalb der Transportflächen angeordnet sein, wobei auch ein Tunnel mit UV-Ausleuchtung denkbar ist. Um den Transport der Gesamtgebinde in Richtung zur Austragsseite zu unterstützen, könnten auch Ausgangsförderer Mitnehmerelemente vorgesehen werden.

Das jeweilige Gebinde kann in Transportrichtung gesehen mehrreihig, also beispielhaft zweireihig oder z.B. dreireihig ausgeführt sein. Möglich ist die Auftragelemente bzw. Auftragsstationen nicht nur starr an dem Lineartransporteur anzuordnen, sondern ebenfalls beweglich, so dass die Auftragelemente zumindest eine Teilstrecke entlang mit dem jeweiligen Behälterstrom mitgeführt werden könnten.

Möglich ist, das Gebinde, also das jeweilige Gesamtgebinde noch mit einem Trageelement, beispielsweise mit einem Griff zu versehen, wozu geeignete Vorrichtungen vorgesehen werden können, welche stromab der Ausgangsseite oder an geeigneter Stelle an dem Lineartransporteur angeordnet ist. Natürlich kann das Tragelement mit dem zuvor genannten Haft- oder Klebemittel an dem Gebinde befestigt werden.

Mit der Erfindung wird so eine Vorrichtung zur Herstellung eines Gebindes zur Verfügung gestellt, welche trotz des Verzichts auf eine umgreifende Folie und/oder trotz des Verzichts auf eine Umreifung in einfacher Weise vermeidet, dass die Behälter bei dem Transport in eine nestende Position gelangen, wobei auch nach der Entnahme eines oder mehrerer Behälter aus einem Gebinde der Zusammenhalt der verbliebenen Behälter im Gebinde erhalten bleibt bzw. wieder hergestellt werden kann. Durch den Verzicht auf eine Folie oder ein Umreifungsband (folienloser Flaschenpack), wird die Umwelt durch Vermeidung von Abfall entlastet, wobei so auch Ressourcen zur Herstellung der meist aus Kunststoff hergestellten Folien oder Unreifungen geschont werden. Die Behälter eines Gebindes werden während des Transportes, also im kontinuierlichen Betrieb der Vorrichtung zur Herstellung von Gebinden, bzw. der Verpackungsmaschine direkt aneinander geklebt. Zudem ist ein folienloser Flaschenpack bei minimalem Klebemittelauftrag erreichbar, welcher eine hinreichende Bindung der einzelnen Behälter zueinander aufweist.

Mit der Erfindung sind extrem hohe Leistungen erreichbar, was unter anderen auch auf die beliebig steuerbare Geschwindigkeit der Transportelemente zurückzuführen ist, welche hinsichtlich Beschleunigung bzw. Verzögerung einstellbar steuerbar sind.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an einem Ausführungsbeispiel näher erläutert. Es zeigen:
- Fig. 1: einen Teilabschnitt einer Vorrichtung zum Herstellen eines Gebindes mit sechs Artikeln bzw. Behältern in einer Seitenansicht, und
- Fig. 2: den Teilabschnitt aus Figur 1 in einer Aufsicht.

In den unterschiedlichen Figuren sind gleiche Teile stets mit denselben Bezugszeichen versehen, weswegen diese in der Regel auch nur einmal beschrieben werden.

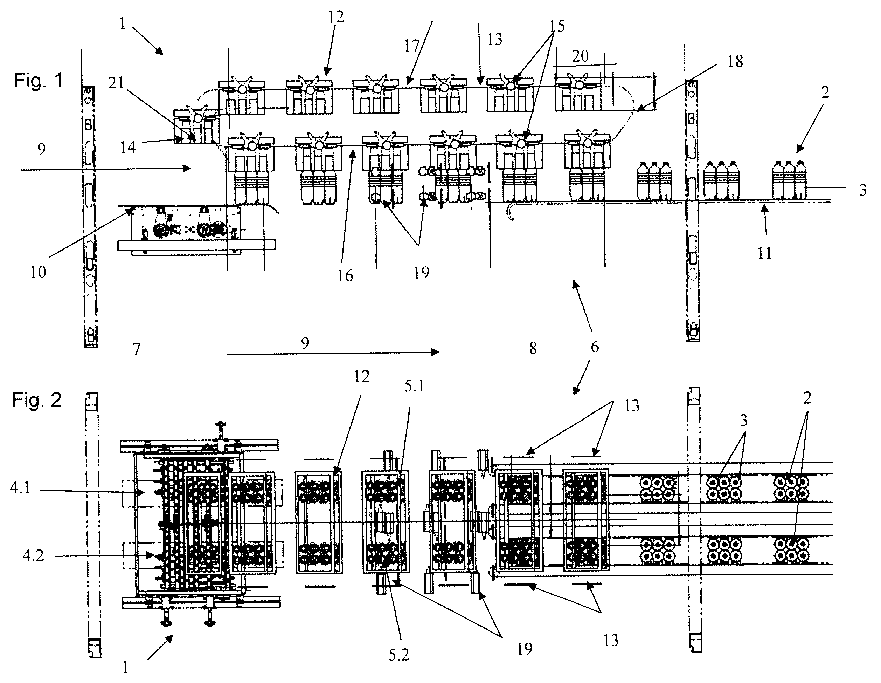

Figur 1 zeigt einen Teilabschnitt einer Vorrichtung 1 zur Herstellung von Gebinden 2 aus Behältern 3, bzw. einer Verpackungsmaschine 1, wobei im Vorfeld aus einem breitem Behälterstrom Behälter 3 in mehrere, wie dargestellt beispielhaft in zwei zweispurige Behälterströme 4.1 und 4.2 (nur Figur 2) umgewandelt werden, in welchem die Behälter 3 beispielsweise bezüglich ihrer Behälter - und/oder Ausstattungsmerkmale eine willkürliche Orientierung aufweisen, durch Abtrennen und Zusammenführen einer vorbestimmten Anzahl an Behältern 3, also beispielsweise jeweils sechs Behälter 3, verdichtete oder formierte Behältergruppen 5.1 und 5.2 oder Teilgebinde 5.1 und 5.2 (nur Figur 2) gebildet und nachfolgend jeweils zu dem Gebinde 2 zusammengefasst werden, wobei zumindest einer der Behälter 3 des Gebindes 2, bevorzugt jeder Behälter 3 ein Haft- oder Klebemittel und/oder einen Haft- oder Klebemittelauftrag zumindest an einer Kontakt- oder Berührfläche aufweist.

Figur 1 zeigt, dass ein Lineartransporteur 6 vorgesehen ist, welcher die Behälter 3 von einer Eingangsseite 7 in Richtung zu einer Ausgangsseite 8 transportiert. Die Transportrichtung von der Eingangsseite 7 zur Austragsseite 8 ist mittels des Pfeils 9 dargestellt. Eingangsseitig ist für jeden Behälterstrom ein Eingangsförderer 10 vorgesehen. Ausgangsseitig sind jeweils Ausgangsförderer 11 vorgesehen.

Der Lineartransporteur 6 weist Transportelemente 12 auf, die jeweils beinen steuerbaren Antrieb 15 aufweisen und entlang eines Führungselementes 13 umlaufend sind, wobei die Transportelemente 12 eine der Anzahl von Behältern 3 des späteren Gebindes 2 entsprechende Anzahl an Kopfführungen 14 aufweisen, welche relativ zum Transportelement 12 axialbeweglich und/oder rotierbar sind.

Die Transportelemente 12 sind als Schlitten bzw. als Tragrahmen ausgeführt, und weisen den steuerbaren Antrieb 15 auf. Der Antrieb 15 kann als Servomotor ausgeführt sein.

Mit dem steuerbaren Antrieb 15 steht das Transportelement 12 mit dem Führungselement 13 bzw. mit der Führungsschiene 13 in Kontakt, an welcher das Transportelement 12 durch den steuerbaren Antrieb 15 entlang bewegt wird. Das Führungselement 13 weist einen Hintrum 16 und einen Rücktrum 17 mit jeweils dazwischen angeordneten Umlenkabschnitten 18 auf. Das Rücktrum 17 ist bezogen auf das Hintrum 16 bevorzugt oberhalb desselben angeordnet. Wie Figur 2 entnehmbar ist, weist jede Seite des Lineartransporteurs 6 jeweils ein Führungselement 13 bzw. Führungsschiene 13 auf, zwischen denen die Transportelemente 12 beweglich gelagert sind.

Mit den Kopfführungen 14 werden die Behälter 3 an dem Transportelement 12 gehalten von der Eingangsseite an Auftragselementen 19 zum Auftragen von Haft- oder Klebmittel vorbei zur Ausgangsseite transportiert. Eingangsseitig werden die Behälter 3 von einem Eingangsförderer 10 übernommen. Ausgangsseitig werden die Behälter 3 auf einen Ausgangsförderer 11 übergeben. Der Eingangs- bzw. der Ausgangsförderer kann jeweils als Bandförderer ausgeführt sein

Das Transportelement 12 bzw. der Schlitten an seiner jeweils längs zur Transportrichtung (Pfeil 9) angeordneten Schmalseite 20 an jeweils einem Führungselement 13 gehalten.

Der steuerbare Antrieb 15 ist mittels einer Steuereinheit separat ansteuerbar. So kann das Transportelement 12 unterschiedliche Geschwindigkeiten entlang seines Transportweges aufweisen. Insbesondere können die Transportelemente 12, welche den Rucktrumm 17 erreicht haben, eine höhere Geschwindigkeit aufweisen als die Transportelemente 12, welche sich noch entlang des Hintrums 16 bewegen. Insbesondere entlang des Rücktrum 17 kann so z.B. eine zunächst höhere Geschwindigkeit der Transportelemente 12 angesteuert werden, wobei die Transportelemente 12 im Bereich des Rücktrumendes in Wartestellung sein können. Entlang des Transportweges des Hintrums 16 dagegen haben die jeweiligen Transportelemente 12 eine bevorzugt gleiche Geschwindigkeit zu einander.

Erkennbar ist, dass die Behälter 3 entlang des Transportweges des Hintrums 16 frei schwebend transportiert werden, da die Behälter an den Kopfführungen 14 gehalten sind. Die Kopfführungen 14 können Pack- oder Zentriertulpen 21 zum mündungsseitigen Halten der Behälter 3 aufweisen. Beispielhaft sind die Kopfführungen 14 relativ zum Transportelement 12 also relativ zum Tragrahmen bzw. Schlitten beweglich. So kann z.B, eine gezielte Ausrichtung der Behälter 3 nach Gestaltungsmerkmalen, nach vorhandenen Etiketten oder ähnlichen Merkmalen durchgeführt werden, so dass die Behälter innerhalb des späteren Gebindes 2 zueinander gleichausgerichtet sind. Dazu müssen lediglich die Kopfführungen 14 entsprechend angesteuert werden, wobei noch zweckmäßig ist, wenn jede Kopfführung 14 separat, also unabhängig von den jeweils anderen steuerbar ist. Die Steuersignale bzw. Steuerbewegungen können von einer entsprechenden Steuereinheit, aber natürlich auch von der zentralen Steuereinheit veranlasst werden. Dazu könnte lediglich eine entsprechend Inspektionsvorrichtung vorgesehen werden, welche die Istposition der Behälter erkennt, und entsprechender Abgleiche mit abgelegten Sollpositionen durchführt und sodann entsprechende Signale generiert. Günstig ist dabei, dass die Kopfführungen 14 um Ihre Hochachse herum rotierbar sind, aber auch entlang von Quer- bzw. Längsachsen axialbeweglich sind, wobei die Behälter 3 frei schwebend transportiert werden können.

In bevorzugter Ausgestaltung sind die Auftragselemente 19 vor der Übergabe der Behälter 3 auf bzw. an den Ausgangsförderer 11 angeordnet. Die Auftragselemente 19 versehen den oder die Behälter mit Haft- oder Klebemittel, wobei die Behälter 3 mittels der axialen Bewegungsmöglichkeit der Behälter über die Kopfführungen 14 optional zueinander ausgerichtet gegeneinander bewegt werden können, sodass bereits ein gewisser Anpressdruck erzeugbar ist, was einem Klebe- bzw. Haftverbund der Behälter 3 aneinander zugute kommt.

Wie beispielhaft dargestellt, können in Transportrichtung (Pfeil 9) gesehen aufeinander folgend mehrere Auftragselemente 19 bzw. Auftragsstationen vorgesehen sein.

### Bezugszeichenliste:

- 1: Vorrichtung zur Herstellung von Gebinden/Verpackungsmaschine
- 2: Gebinde
- 3: Behälter
- 4: Behälterspur (4.1 und 4.2)
- 5: Teilgebinde (5.1 und 5.2)
- 6: Lineartransporteur
- 7: Eingangsseite
- 8: Ausgangsseite
- 9: Transportrichtung
- 10: Eingangsförderer
- 11: Ausgangsförderer
- 12: Transportelemente
- 13: Führungselemente
- 14: Kopfführungen
- 15: steuerbarer Antrieb
- 16: Hintrum
- 17: Rücktrum
- 18: Umlenkabschnitt
- 19: Auftragselemente/Auftragsstation
- 20: Schmalseite
- 21: Pack-oder Zentriertulpe

## Patentansprüche

1. Vorrichtung zur Herstellung von Gebinden (2), wobei aus einem breitem Behälterstrom mittels Gassenteilung Behälter (3) in mehrere einspurige Behälterströme (4.1 und 4.2) umgewandelt werden, und mit mindestens einer Abteil- und/oder Verdichtereinheit zum Abteilen und Verdichten einer vorbestimmten Anzahl an Behältern (3) Teilgebinde (5.1 und 5.2) gebildet und nachfolgend jeweils zu dem späteren Gebinde (2) zusammengefasst werden, wobei ein Lineartransporteur (6) vorgesehen ist, welcher die Behälter (3) von einer Eingangsseite (7) in Richtung zu einer Ausgangsseite (8) transportiert und wobei Auftragselemente (19) vorgesehen sind, so dass zumindest einer der Behälter (3) des Gebindes (2; 5.1, 5.2) ein Haft- oder Klebemittel und/oder einen Haft- oder Klebemittelauftrag zumindest an einer Kontakt- oder Berührfläche aufweist, **gekennzeichnet durch** den Lineartransporteur (6), welcher Kopfführungen (14) enthaltende Transportelemente (12) aufweist, zum Halten und Transport der Behälter (3) von der Eingangsseite an den Auftragselementen (19) vorbei zur Ausgangsseite, wobei die Transportelemente (12) jeweils einen steuerbaren Antrieb (15) aufweisen und entlang eines Führungselementes (13) umlaufend sind, wobei die Transportelemente (12) eine der Anzahl von Behältern (3) der späteren Gebinde entsprechende Anzahl an Kopfführungen (14) aufweisen, welche relativ zum Transportelement (12) axial beweglich und/oder rotierbar sind.

2. Vorrichtung nach Anspruch 1, **dadurch gekennzeichnet, dass** die Transportelemente (12) als Schlitten oder Tragrahmen ausgeführt sind, welche den steuerbaren Antrieb (15) aufweisen.

3. Vorrichtung nach Anspruch 1 oder 2, **dadurch gekennzeichnet, dass** jeder Antrieb (15) eines jeweiligen Transportelementes (12) separat und unabhängig von den jeweils anderen Antrieben (15) ansteuerbar ist.

4. Vorrichtung nach einem der vorhergehenden Ansprüche, **dadurch gekennzeichnet, dass** das Führungselement (13) einen Hintrum (16) und einen Rucktrumm (17) aufweist, zwischen denen jeweils ein Umlenkabschnitt (18) angeordnet ist.

5. Vorrichtung nach einem der vorhergehenden Ansprüche, **dadurch gekennzeichnet, dass** das Transportelement (12) jeweils an seiner Schmalseite (20) an einem Führungselement (13) geführt ist.

6. Vorrichtung nach einem der vorhergehenden Ansprüche, **dadurch gekennzeichnet, dass** die Behälter (3) freischwebend zumindest entlang eines Teilabschnittes transportiert werden.

7. Vorrichtung nach einem der vorhergehenden Ansprüche, **dadurch gekennzeichnet, dass** die Kopfführungen (14) relativ zum Transportelement (12) bewegbar sind.

8. Vorrichtung nach einem der vorhergehenden Ansprüche, **dadurch gekennzeichnet, dass** die Kopfführungen (14) unabhängig voneinander ansteuerbar sind.

9. Vorrichtung nach einem der vorhergehenden Ansprüche, **dadurch gekennzeichnet, dass** das Transportelement (12) so ausführbar ist, das mehrere spätere Gebinde (2) damit transportierbar sind.

## Claims

1. A device for creating packaged units (2), from a wide stream of containers, by forming lanes, wherein the containers (3) are converted into multiple one-lane streams of containers (4.1 and 4.2), and, comprising at least one separation and/or nesting unit for separating and nesting a predetermined number of containers (3) such that partial units (5.1 and 5.2) are formed and then brought together to form the later packaged unit (2), wherein a linear conveyor (6) is provided which conveys the containers (3) from an inlet side (7) in the direction of an outlet side (8), wherein application elements (19) are provided such that at least one of the containers (3) of the packaged unit (2; 5.1, 5.2) exhibits an adhesive or glue and/or an adhesive or glue application on at least one contact surface, **characterised by**
the linear conveyor (6) comprises conveying elements (12) containing top guides (14) for the holding and conveying of the containers (3) from the inlet side, past the application elements (19) to the outlet side, and wherein the conveying elements (12) in each case comprise a controllable drive (15) and circulate along a guide element (13), wherein the conveying elements (12) comprise a number of top guides (14) corresponding to the number of containers (3) of the later packaged unit, which are axially movable and/or rotatable relative to the conveying element (12).

2. Device according to claim 1, **characterised in that** the conveying elements (12) are configured as carriages or carrying frames, which comprise the controllable drive (15).

3. Device according to claim 1 or 2, **characterised in that** each drive (15) of a respective conveying element (12) can be controlled separately and independently of each other drive (15).

4. Device according to any one of the preceding claims, **characterised in that** the guide element (13) comprises a feed strand (16) and a return strand (17), between which in each case a deflection section (18) is arranged.

5. Device according to any one of the preceding claims, **characterised in that** the conveying element (12) is in each case guided on its narrow side (20) on a guide element (13).

6. Device according to any one of the preceding claims, **characterised in that** the containers (3) are conveyed hanging freely at least along one part section.

7. Device according to any one of the preceding claims, **characterised in that** the top guides (14) are movable relative to the conveying element (12).

8. Device according to any one of the preceding claims, **characterised in that** the top guides (14) can be controlled independently of one another.

9. Device according to any one of the preceding claims, **characterised in that** the conveying element (12) can be configured in such a way that a plurality of later packaged units (2) can be conveyed with it.

## Revendications

1. Dispositif servant à fabriquer des colis (2), dans lequel à partir d'un large flux de contenants des contenants (3) sont transformés, au moyen d'une séparation d'allées, en plusieurs flux de contenants (4.1 et 4.2) à voie unique, et avec au moins une unité de compartimentage et/ou de tassement servant à compartimenter et à tasser un nombre prédéterminé de contenants (3) des colis partiels (5.1 et 5.2) sont formés et sont par la suite regroupés pour former respectivement le colis (2) ultérieur, sachant qu'est prévu un transporteur linéaire (6), qui transporte les contenants (3) depuis un côté d'entrée (7) en direction d'un côté de sortie (8) et sachant que sont prévus des éléments applicateurs (19) de telle sorte qu'au moins un des contenants (3) du colis (2 ; 5.1, 5.2) présente, au moins au niveau d'une surface de contact, un adhésif ou une colle et/ou une couche d'adhésif ou de colle, **caractérisé par** le transporteur linéaire (6), qui présente des éléments de transports (12) contenant des guidages de tête (14), servant à maintenir et à transporter les contenants (3) depuis le côté d'entrée, le long des éléments applicateurs (19), en direction du côté de sortie, sachant que les éléments de transport (12) présentent respectivement un entraînement (15) pouvant être commandé et circulent en rotation le long d'un élément de guidage (13), sachant que les éléments de transport (12) présentent un nombre, correspondant au nombre de contenants (3) du colis ultérieur, de guidages de tête (14), qui peuvent être déplacés et/ou tournés de manière axiale par rapport l'élément de transport (12).

2. Dispositif selon la revendication 1, **caractérisé en ce que** les éléments de transport (12) sont réalisés sous la forme de chariots ou de châssis de support, qui présentent l'entraînement (15) pouvant être commandé.

3. Dispositif selon la revendication 1 ou 2, **caractérisé en ce que** chaque entraînement (15) d'un élément de transport (12) respectif peut être commandé de manière séparée et de manière indépendante des autres entraînements (15) respectivement.

4. Dispositif selon l'une quelconque des revendications précédentes, **caractérisé en ce que** l'élément de guidage (13) présente un tronçon aller (16) et un tronçon retour (17), entre lesquels un segment de renvoi (18) est respectivement disposé.

5. Dispositif selon l'une quelconque des revendications précédentes, **caractérisé en ce que** l'élément de transport (12) est guidé, respectivement au niveau de sa tranche (20), au niveau d'un élément de guidage (13).

6. Dispositif selon l'une quelconque des revendications précédentes, **caractérisé en ce que** les contenants (3) sont transportés en suspension au moins le long d'un segment partiel.

7. Dispositif selon l'une quelconque des revendications précédentes, **caractérisé en ce que** les guidages de tête (14) peuvent être déplacés par rapport à l'élément de transport (12).

8. Dispositif selon l'une quelconque des revendications précédentes, **caractérisé en ce que** les guidages de tête (14) peuvent être commandés de manière indépendante les uns des autres.

9. Dispositif selon l'une quelconque des revendications précédentes, **caractérisé en ce que** l'élément de transport (12) peut être réalisé de telle sorte que plusieurs colis (2) ultérieurs peuvent être transportés avec ledit élément de transport.
